# EUROPEAN PATENT APPLICATION

(11) **EP 3 544 037 A1**
(43) Date of publication of application: **25.09.2019**
(21) Application number: 17871230.3
(22) Date of filing: 13.11.2017
(51) Int. Cl.: H01G 9/20

(54) **PHOTOELECTRIC CONVERSION ELEMENT**

(30) Priority: 15.11.2016 JP 2016222232
(71) Applicant: Fujikura Ltd., Tokyo 135-8512 (JP)
(72) Inventor: KATSUMATA, Kenji, Sakura-shi Chiba 285-8550 (JP); NAKA, Keisuke, Sakura-shi Chiba 285-8550 (JP)
(74) Representative: Hoffmann Eitle
(86) International application number: PCT/JP2017/040823
(87) International publication number: WO 2018/092739

(57) **Abstract**

Disclosed is a photoelectric conversion element comprising a transparent substrate and at least one photoelectric conversion cell provided on one surface of the transparent substrate. The photoelectric conversion cell includes an electrode provided on the one surface of the transparent substrate, a counter substrate facing the electrode and including a metal substrate, and a ring-shaped sealing portion provided between the transparent substrate and the counter substrate. The photoelectric conversion element includes a connecting terminal provided on the side facing the one surface of the transparent substrate and on the outside of the sealing portion, a conductive member including a wiring part connecting the metal substrate of the photoelectric conversion cell and the connecting terminal, and a covering part covering at least a main surface on the side facing away from the transparent substrate and extending along an extending direction of the wiring part. The one end of the covering part extends to the inside of the sealing portion and the other end of the covering part extends to the outside of the sealing portion when the photoelectric conversion element is viewed in a direction orthogonal to the one surface of the transparent substrate. A linear expansion coefficient of the covering part is smaller than a linear expansion coefficient of the sealing portion.

## Description

### TECHNICAL FIELD

The present invention relates to a photoelectric conversion element.

### BACKGROUND ART

As a photoelectric conversion element, a photoelectric conversion element using dyes attracts attention since it is inexpensive and high photoelectric conversion efficiency can be obtained, and various developments on the photoelectric conversion element using dyes are performed.

Photoelectric conversion elements using dyes generally includes a transparent substrate and at least one photoelectric conversion cell provided on one surface of the transparent substrate. The photoelectric conversion cell includes an electrode provided on the transparent substrate, a counter substrate facing the electrode, a ring-shaped sealing portion provided between the transparent substrate and the counter substrate, an oxide semiconductor layer provided between the electrode and the counter substrate, and a dye supported on the oxide semiconductor layer.

As such a photoelectric conversion element using dyes, for example, a dye-sensitized photoelectric conversion element described in the following patent document 1 is known. In the following patent document 1, disclosed is a photoelectric conversion element which includes a conductive member connecting a metal substrate of at least one photoelectric conversion cell and a connecting terminal on a transparent conductive layer provided in a state insulated from an electrode of the photoelectric conversion cell on one surface of a transparent substrate.

### CITATION LIST

### PATENT DOCUMENT

Patent document 1: JPA2016-72418

### SUMMARY OF THE INVENTION

### PROBLEM TO BE SOLVED BY THE INVENTION

However, the dye-sensitized photoelectric conversion element described in the above-mentioned patent document 1 has had the following problems.

That is, the dye-sensitized photoelectric conversion element described in the patent document 1 has had room for improvement in terms of durability in the case of being used under an environment having a large temperature change.

The present invention has been made in view of the above circumstances, an object of the present invention is to provide a photoelectric conversion element having excellent durability even when used under an environment having a large temperature change.

### MEANS FOR SOLVING PROBLEM

First, the present inventors have studied the cause of the above problem in the dye-sensitized photoelectric conversion element described in the above-mentioned patent document 1. As a result, the present inventors considered that, in the dye-sensitized photoelectric conversion element described in the above-mentioned patent document 1, the above problem is especially caused due to the fact that when the sealing portion expands and contracts in accordance with an ambient temperature change, a repetitive stress is easily applied to a main surface on a side facing away from the transparent substrate of the conductive member accordingly. Thus, the inventors of the present invention have repeated further extensive studies and, as a result, found that the above problem can be solved by the following invention.

That is, the present invention is a photoelectric conversion element including a transparent substrate, at least one photoelectric conversion cell provided on one surface of the transparent substrate, in which the photoelectric conversion cell includes an electrode provided on the one surface of the transparent substrate, a counter substrate facing the electrode and including a metal substrate and a ring-shaped sealing portion provided between the transparent substrate and the counter substrate, in which the photoelectric conversion element includes a connecting terminal provided on the side facing the one surface of the transparent substrate and on the outside of the sealing portion, a conductive member including a wiring part connecting the metal substrate of the photoelectric conversion cell and the connecting terminal and a covering part covering at least a main surface on the side facing away from the transparent substrate of the wiring part and extending along an extending direction of the wiring part, in which one end of the covering part extends to the inside of the sealing portion and the other end of the covering part extends to the outside of the sealing portion when the photoelectric conversion element is viewed in a direction orthogonal to the one surface of the transparent substrate, and in which a linear expansion coefficient of the covering part is smaller than a linear expansion coefficient of the sealing portion.

According to the photoelectric conversion element, when the sealing portion expands and contracts in a direction orthogonal to one surface of the transparent substrate in accordance with an ambient temperature change, in particular, a repetitive stress is easily applied to the main surface of the wiring part of the conductive member on the side facing away from the transparent substrate. In contrast, in the photoelectric conversion element of the present invention, at least the main surface of the wiring part of the conductive member on the side facing away from the transparent substrate is covered with the covering part, and the covering part has a linear expansion coefficient smaller than that of the sealing portion. Therefore, the covering part is less likely to expand and contract than the sealing portion. In addition, when the photoelectric conversion element is viewed in a direction orthogonal to one surface of the transparent substrate, one end of the covering part extends to the inside of the sealing portion, and the other end of the covering part extends to the outside of the sealing portion. In other words, when the photoelectric conversion element is viewed in a direction orthogonal to one surface of the transparent substrate, both ends of the covering part extend to the inside and outside of the sealing portion where the variation in the direction orthogonal to one surface of the transparent substrate is the most likely to occur in accordance with the temperature change. In other words, when the photoelectric conversion element is viewed in a direction orthogonal to one surface of the transparent substrate, both ends of the covering part extend to a portion where the variation in a direction orthogonal to one surface of the transparent substrate in accordance with the temperature change is less likely to occur compared with the sealing portion. Therefore, even if the sealing portion expands and contracts in a direction orthogonal to one surface of the transparent substrate and a repetitive stress is applied to at least the main surface of the wiring part on the side facing away from the transparent substrate, the stress is sufficiently relaxed by the covering part. Therefore, the occurrence of cracks in at least the main surface of the wiring on the side facing away from the transparent substrate is sufficiently suppressed. Therefore, the photoelectric conversion element of the present invention can have excellent durability even when used under an environment having a large temperature change.

In the above-mentioned photoelectric conversion element, it is preferable that the covering part extend beyond one end of the wiring part on the metal substrate side and be also fixed at the metal substrate of the counter substrate.

In this case, in accordance with expansion and contraction of the sealing portion, the movement of one end of the wiring part on the metal substrate side in a direction away from the metal substrate is sufficiently regulated, and it is sufficiently suppressed that one end of the wiring part on the metal substrate side is peeled from the metal substrate.

In the above-mentioned photoelectric conversion element, it is preferable that the covering part extend beyond the other end on the connecting terminal side of the wiring part and be also fixed at a conductive layer provided between the connecting terminal and the transparent substrate.

In this case, in accordance with the expansion and contraction of the sealing portion, the movement of the other end on the connecting terminal side of the wiring part in a direction away from the connecting terminal is sufficiently regulated and it is suppressed that the other end on the connecting terminal side of the wiring part is peeled from the connecting terminal.

In the above-mentioned photoelectric conversion element, it is preferable that the covering part further cover a side surface connecting the main surface and a surface on the opposite side to the main surface and be fixed at the metal substrate and the connecting terminal.

In this case, peeling of the wiring part from the metal substrate or the connecting terminal is sufficiently suppressed.

In the above-mentioned photoelectric conversion element, the linear expansion coefficient of the covering part to the linear expansion coefficient of the sealing portion is preferably 0.5 or less.

In this case, even if the sealing portion expands and contracts and a repetitive stress is applied to at least the main surface on the side facing away from the transparent substrate, the stress is more sufficiently relaxed by the covering part. Therefore, the occurrence of cracks in at least the main surface on the side facing away from the transparent substrate of the wiring part is sufficiently suppressed. Therefore, the photoelectric conversion element can have more excellent durability even when used under an environment having a large temperature change.

In the above-mentioned photoelectric conversion element, the linear expansion coefficient of the covering part to the linear expansion coefficient of the sealing portion is preferably 0.15 or more.

In this case, the occurrence of cracks in the covering part under an environment with a large temperature change is more sufficiently suppressed.

In the above-mentioned photoelectric conversion element, a linear expansion coefficient of the covering part is 150 ppm/°C or less.

In this case, even if the sealing portion expands and contracts and a repetitive stress is applied to at least the main surface on the side facing away from the transparent substrate of the wiring part, the stress is more sufficiently relaxed by the covering part. Therefore, at least the occurrence of cracks in the main surface of the wiring part on the side facing away from the transparent substrate is more sufficiently suppressed. Therefore, the photoelectric conversion element can have more excellent durability even when used under an environment having a large temperature change.

In the above-mentioned photoelectric conversion element, the linear expansion coefficient of the covering part is 25 ppm/°C or more.

In this case, the occurrence of cracks in the covering part under an environment with a large temperature change is more sufficiently suppressed.

In the above-mentioned photoelectric conversion element, it is preferable that the covering part contain a polyimide resin.

In this case, more excellent insulation can be imparted to the covering part.

In the above-mentioned photoelectric conversion element, the covering part is preferably black.

In this case, more excellent concealing property can be imparted to the covering part, or heat generated in the photoelectric conversion cell is easily released due to a large heat radiation.

In addition, in the present invention, "linear expansion coefficient" is a value measured according to a method shown in JIS K 7197.

### EFFECT OF THE INVENTION

According to the present invention, a photoelectric conversion element having excellent durability even when used under an environment having a large temperature change is provided.

### BRIEF DESCRIPTION OF DRAWINGS

Fig. 1 is a plan view showing a first embodiment of a photoelectric conversion element of the present invention.
Fig. 2 is a cut surface end view taken along line II-II of Fig. 1;
Fig. 3 is a plan view showing a pattern of a transparent conductive layer in the photoelectric conversion element of Fig. 1;
Fig. 4 is a plan view showing the photoelectric conversion element of Fig. 1 excluding a covering part.
Fig. 5 is a cross-sectional view showing a state where the photoelectric conversion element of Fig. 4 excluding a covering part is cut with a plane crossing the sealing portion;
Fig. 6 is a plan view showing a structure obtained in the middle of the manufacturing method of the photoelectric conversion element of Fig.1;
Fig. 7 is a cut surface end view showing a second embodiment of the photoelectric conversion element of the present invention; and
Fig. 8 is a cut surface end view showing a third embodiment of the photoelectric conversion element of the present invention.

### MODE(S) FOR CARRYING OUT THE INVENTION

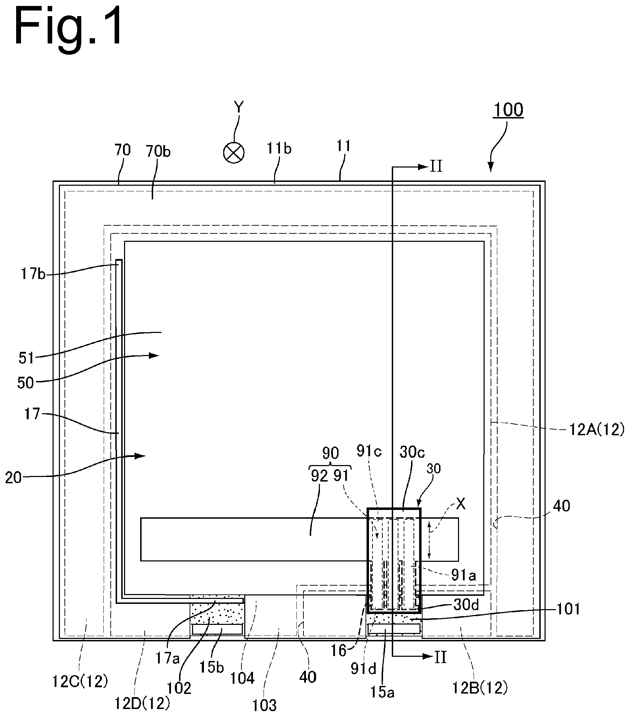

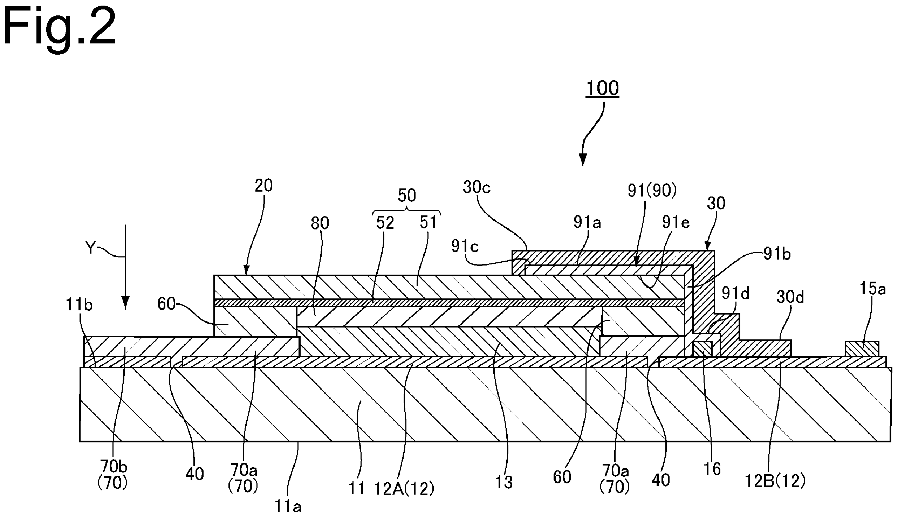

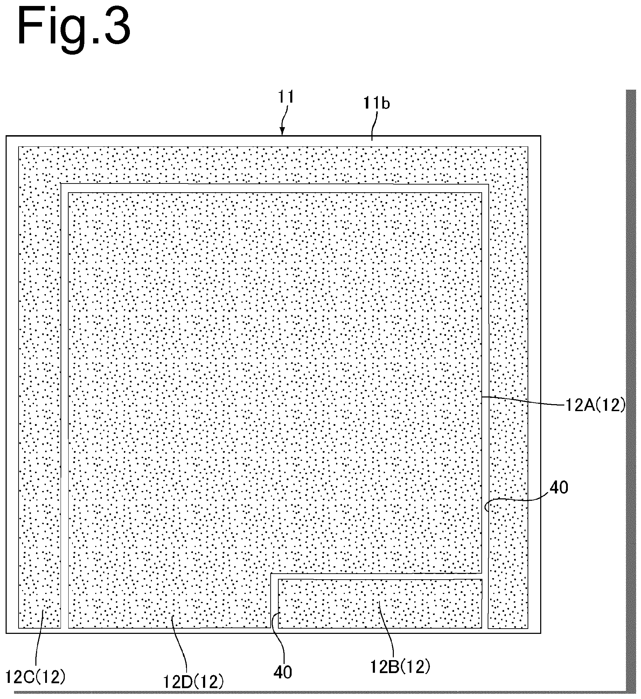

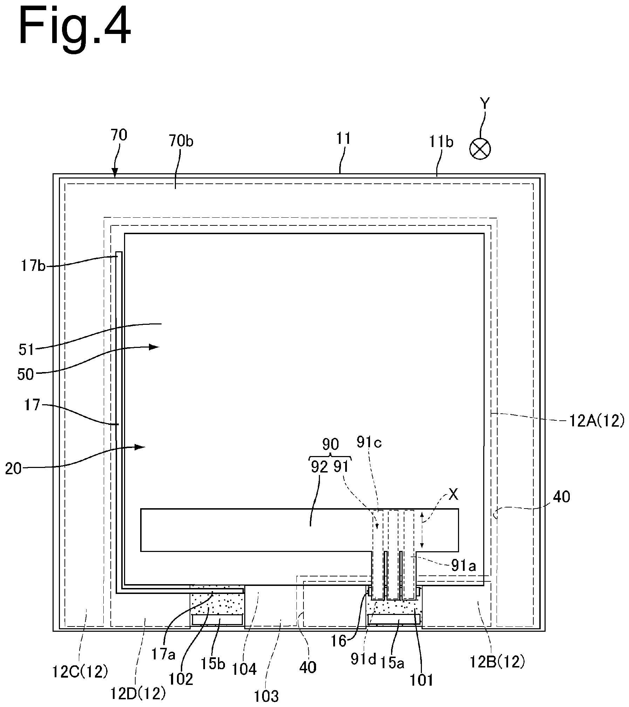

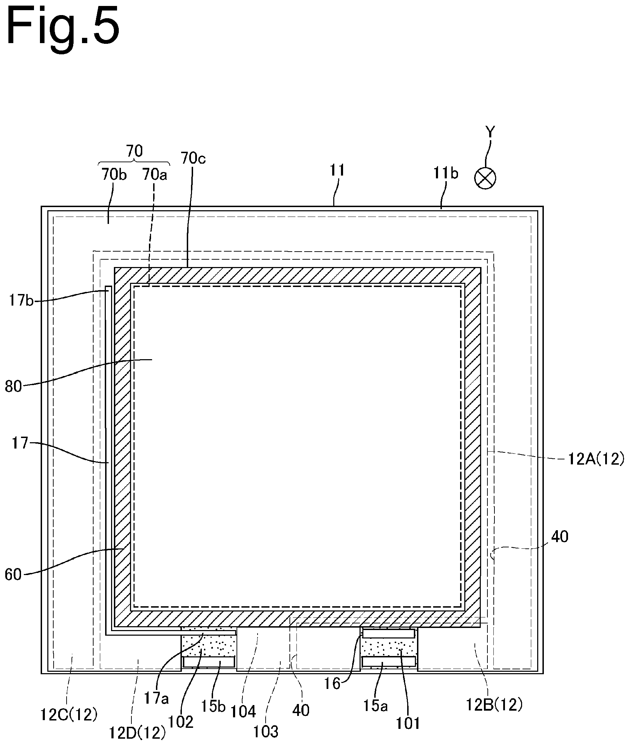

Hereinafter, an embodiment of the photoelectric conversion element of the present invention is described in detail with reference to Figs. 1-5. Fig. 1 is a plan view showing a first embodiment of a photoelectric conversion element of the present invention; Fig 2 is a cut surface end view taken along line II-II in Fig. 1; Fig. 3 is a plan view showing a pattern of a transparent conductive layer in the photoelectric conversion element of Fig.1; Fig. 4 is a plan view showing the photoelectric conversion element excluding a covering part; and Fig. 5 is a cross-sectional view showing a state where the photoelectric conversion element shown in Fig. 4 excluding the covering part is cut with a plane crossing the sealing portion

As shown in Figs. 1 and 2, a photoelectric conversion element 100 includes a transparent substrate 11 having a light receiving surface 11a and a photoelectric conversion cell 20 provided on one surface 11b (hereinafter referred to as "cell installation surface") of the transparent substrate 11 on the opposite side to the light receiving surface.

As shown in Fig.3, a transparent conductive layer 12 is provided on the cell installation surface 11b of the transparent substrate 11. The transparent conductive layer 12 includes an electrode 12A, a conductive first current extracting portion 12B for extracting a current from the photoelectric conversion cell 20, a conductive second current extracting portion 12D for extracting a current from the photoelectric conversion cell 20, a separating part 12C provided to surround the electrode 12A, the first extracting portion 12B and the second extracting portion 12D. The electrode 12A, the first current extracting portion 12B and the separating part 12C are disposed via a groove 40 with a state insulated from each other. The electrode 12A and the second current extracting portion 12D are connected to each other. The separating part 12C, the first current extracting portion 12B and the second current extracting portion 12D are disposed via the groove 40 in a state insulated from each other. The first current extracting portion 12B and the second current extracting portion 12D are also disposed to be adjacent via the groove 40 in a state insulated from each other.

As shown in Fig. 2, the photoelectric conversion cell 20 includes an electrode 12A provided on the cell installation surface 11b of the transparent substrate 11, a counter substrate 50 facing the electrode 12A, a ring-shaped sealing portion 60 provided between the transparent substrate 11 and the counter substrate 50, an oxide semiconductor layer 13 provided on the electrode 12A, an insulating layer 70 provided at least between the sealing portion 60 and the electrode 12A and composed of an insulating material, and an electrolyte 80 disposed between the electrode 12A and the counter substrate 50.

As shown in Fig. 2 and Fig.5, a first external connecting terminal 15a is provided on the first current extracting portion 12B, and a connecting terminal 16 is provided between the first external connecting terminal 15a and the sealing portion 60 on the first current extracting portion 12B and in a state separated from the first external connecting terminal 15a. On the other hand, as shown in Fig.5, a second external connecting terminal 15b is provided on the second current extracting portion 12D. A current collecting wiring having a resistance lower than that of the electrode 12A and the second current extracting portion 12D is provided so as to straddle the second current extracting portion 12D and the electrode 12A. One end of the current collecting wiring 17 (hereinafter referred to as a "first current collecting wiring end") is connected to a position separated from the second external connecting portion 15b between the second external connecting terminal 15b and the sealing portion 60 on the second current extracting portion 12D, and the other end 17b of the current collecting wiring 17 (hereinafter referred to as "second current collecting wiring end") is connected to a position outside the sealing portion 60 and on the electrode 12A.

As shown in Fig. 2, the counter substrate 50 includes a metal substrate 51 serving as a substrate and an electrode, and a catalyst layer 52 which is provided on the side facing the electrode 12A of the metal substrate 51 and contributes to reduction of the electrolyte 80.

As shown in Fig.2 and Fig.4, the photoelectric conversion element 100 includes a conductive member 90 containing at least one (three in Fig.4) wiring part 91. The wiring part 91 connects the metal substrate 51 and the connecting portion 16 provided on the side of the cell installation surface 11b of the transparent substrate 11 and outside the sealing portion 60. In other words, one end 91c of the wiring part 91 is connected to the metal substrate 51 of the photoelectric conversion cell 20 and the other end 91d of the wiring part 91 is connected to the connecting terminal 16 outside the sealing portion 60. The conductive member 90 further includes a body part 92 intersecting the wiring part 91 on the metal substrate 51.

As shown in Fig. 5, the insulating layer 70 includes an inner insulating layer 70a which is on the side inner than the outer peripheral edge 70c of the sealing portion 60, and an outer insulating layer 70b on the side outer than the outer peripheral edge 70c of the sealing portion 60 when the photoelectric conversion element 100 is viewed in a direction Y orthogonal to the cell installation surface 11b of the transparent substrate 11. The inner insulating layer 70a is provided so as to be in contact with the oxide semiconductor layer 13. That is, the inner insulating layer 70a covers the entire region excluding a region where the oxide semiconductor layer 13 is provided of the electrode 12A as well as the groove 40 on the side inner than the outer peripheral edge 70c of the sealing portion 60 in order to suppress intrusion of moisture into the photoelectric conversion cell 20 from the groove 40. In addition, the inner insulating layer 70a enters the groove 40 at a portion overlapping with the groove 40 in order to suppress intrusion of moisture into the photoelectric conversion cell 20 from the groove 40. The outer insulating layer 70b is provided to cover and hide a region of the transparent conductive layers 12 excluding a Connecting Terminal-External Connecting Terminal region 101 between the first external connecting terminal 15a and the connecting terminal 16 as well as a Wiring-External Connecting Terminal region 102 between the second external connecting terminal 15b and the first current collecting wiring end 17a. An Inter-External Connecting Terminal region 103 between the first external connecting terminal 15a and the second external connecting terminal 15b of the region outside the sealing portion 60 and on the cell installation surface 11b of the transparent substrate 11 is covered and hidden with the outer insulating layer 70b of the insulating layer 70. Moreover, a wire-connecting terminal region 104 between the connecting terminal 16 and the first current collecting wiring end 17a of the region outside the sealing portion 60 and on the cell installation surface 11b of the transparent substrate 11 is also covered and hidden with the outer insulating layer 70b of the insulating layer 70.

As shown in Fig. 1 and Fig.2, the photoelectric conversion element 100 includes a covering part 30 covering a main surface 91a of the wiring part 91 on the side facing away from the transparent substrate 11 and extending along the extending direction X of the wiring part 91. Herein, when the photoelectric conversion element 100 is viewed in the direction Y orthogonal to the cell installation surface 11b of the transparent substrate 11, one end 30c of the covering part 30 extends to the inside of the sealing portion 60 and the other end 30d of the covering part 30 extends to the outside of the sealing portion 60. More specifically, one end 30c of the covering part 30 extends to the inside of the sealing portion 60 beyond the one end 91c of the wiring part 91 and is also fixed at the metal substrate 51 of the counter substrate 50. The other end 30d of the wiring part 91 extends to the outside of the sealing portion 60 beyond the other end 91d of the wiring part 91 and is also fixed at the first current extracting portion 12B provided between the connecting terminal 16 and the transparent substrate 11. Further, the covering part 30 also covers a side surface 91b connecting the main surface 91a and a surface 91e on the opposite side to the main surface 91a and is fixed at the metal substrate 51 and the connecting terminal 16. The linear expansion coefficient of the covering part 30 is smaller than the linear expansion coefficient of the sealing portion 60.

According to the photoelectric conversion element 100, when the sealing portion 60 expands and contracts in the direction Y orthogonal to the cell installation surface 11b of the transparent substrate 11 in accordance with an ambient temperature change, in particular, a repetitive stress is easily applied to the main surface 91a of the wiring part 91 of the conductive member 90 on the side facing away from the transparent substrate 11. In contrast, in the photoelectric conversion element 100, the main surface 91a of the wiring part 91 of the conductive member 90 on the side facing away from the transparent substrate 11 is covered with the covering part 30, and the covering part 30 has the linear expansion coefficient smaller than that of the sealing portion 60. Therefore, the covering part 30 is less likely to expand and contract than the sealing portion 60. In addition, when the photoelectric conversion element 100 is viewed in the direction Y orthogonal to the cell installation surface 11b of the transparent substrate 11, one end 31c of the covering part 30 extends to the inside of the sealing portion 60, and the other end 30d of the covering part 30 extends to the outside of the sealing portion 60. In other words, when the photoelectric conversion element 100 is viewed in the direction Y orthogonal to the cell installation surface 11b of the transparent substrate 11, both ends 30c and 30d of the covering part 30 extend to the inside and outside of the sealing portion 60 where the variation in the direction Y orthogonal to the cell installation surface 11b of the transparent substrate 11 is the most likely to occur in accordance with the temperature change. In other words, when the photoelectric conversion element 100 is viewed in the direction Y orthogonal to the cell installation surface 11b of the transparent substrate 11, both ends 30c and 30d of the covering part 30 extend to a portion where the variation in the direction Y orthogonal to the cell installation surface 11b of the transparent substrate 11 in accordance with the temperature change is less likely to occur compared with the sealing portion 60. Therefore, even if the sealing portion 60 expands and contracts in the direction Y orthogonal to the cell installation surface 11b of the transparent substrate 11 and a repetitive stress is applied to the main surface 91a of the wiring part 91 on the side facing away from the transparent substrate 11, the stress is sufficiently relaxed by the covering part 30. Therefore, the occurrence of cracks in the main surface 91a of the wiring part 91 on the side facing away from the transparent substrate 11 is sufficiently suppressed. Therefore, the photoelectric conversion element 100 can have excellent durability even when used under an environment having a large temperature change.

In the photoelectric conversion element 100, one end 30c of the wiring part 30 extends beyond one end 91c of the wiring part 91 on the metal substrate 51 side and is also fixed at the metal substrate 51 of the counter substrate 50. Therefore, in accordance with expansion and contraction of the sealing portion 60, one end 91c of the wiring part 91 on the metal substrate 51 side, the movement of one end 91c of the wiring part 91 on the metal substrate 51 side in a direction away from the metal substrate 51 is sufficiently regulated, and it is sufficiently suppressed that one end 91c of the wiring part 91 on the metal substrate 51 side is peeled from the metal substrate 51.

Further, in the photoelectric conversion element 100, the other end 30d of the covering part 30 extends beyond the other end 91d on the connecting terminal 16 side of the wiring part 91 and is also fixed at the first current extracting portion 12B. Therefore, in accordance with the expansion and contraction of the sealing portion 60, the movement of the other end 91d on the connecting terminal 16 side of the wiring parts 91 in a direction away from the connecting terminal 16 is sufficiently regulated and it is suppressed that the other end 91d on the connecting terminal 16 side of the wiring part 91 is peeled from the connecting terminal 16.

Further, in the photoelectric conversion element 100, the covering part 30 also covers the side surface 91b connecting the main surface 91a and the surface 91e on the opposite side to the main surface 91a of the wiring part 91 and is fixed at the metal substrate 51 and the connecting terminal 16. Therefore, peeling of the wiring part 91 from the metal substrate 51 or the connecting terminal 16 is sufficiently suppressed.

Next, the transparent substrate 11, the transparent conductive layer 12, the oxide semiconductor layer 13, the first external connecting terminal 15a, the second external connecting terminal 15b, the connecting terminal 16, the current collecting wiring 17, dyes, the covering part 30, the counter substrate 50, the sealing portion 60, the insulating layer 70, the electrolyte 80 and the conductive member 90 are described in detail.

### <Transparent substrate>

The material constituting the transparent substrate 11 may be any transparent material, for example, and examples of such a transparent material include glass such as borosilicate glass, soda lime glass, glass which is composed of soda lime and whose iron component is less than that of ordinary soda lime glass, and quartz glass; polyethylene terephthalate (PET), polyethylene naphthalate (PEN), polycarbonate (PC), and polyethersulfone (PES). The thickness of the transparent substrate 11 is appropriately determined depending on the size of the photoelectric conversion element 100 and is not particularly limited, but it may be set to the range of from 0.05 mm to 10 mm, for example.

### <Transparent conductive layer>

Examples of the material contained in the transparent conductive layer 12 include a conductive metal oxide such as tin-doped indium oxide (ITO), tin oxide (SnO₂), and fluorine-doped tin oxide (FTO). The transparent conductive layer 12 may be constituted by a single layer or a laminate consisting of a plurality of layers containing different conductive metal oxides. It is preferable that the transparent conductive layer 12 contain FTO since FTO exhibits high heat resistance and chemical resistance in a case in which the transparent conductive layer 12 is constituted by a single layer. The transparent conductive layer may further include glass frit. The thickness of the transparent conductive layer 12 may be set to the range of from 0.01 to 2 µm, for example.

### <Oxide semiconductor layer>

The oxide semiconductor layer 13 is composed of oxide semiconductor particles. The oxide semiconductor particles are composed of, for example, titanium oxide (TiO₂), silicone oxide (SiO₂), zinc oxide (ZnO), tungsten oxide (WO₃), niobium oxide (Nb₂O₅), strontium titanate (SrTiO₃), tin oxide (SnO₂), indium oxide (In₃O₃), zirconium oxide (ZrO₂), thallium oxide (Ta₂O₅), lanthanum oxide (La₂O₃), yttrium oxide (Y₂O₃), holmium oxide (Ho₂O₃), bismuth oxide (Bi₂O₃), cerium oxide (CeO₂), aluminum oxide (Al₂O₃), or two or more kinds of these.

The oxide semiconductor layer 13 is typically composed of an absorbing layer for absorbing light but may be composed of the absorbing layer and a reflective layer which returns the light transmitted through the absorbing layer to the absorbing layer by reflecting the light.

The thickness of the oxide semiconductor layer 13 is not particularly limited, but may be typically set to from 0.5 to 50 µm.

### <First external connecting terminal and second external connecting terminal>

The first external connecting terminal 15a and the second external connecting terminal 15b include metal materials. Examples of the metal materials include silver, copper, and indium. They may be used singly or in a combination of two or more thereof. The first external connecting terminal 15a and the second external connecting terminal 15b are composed of, for example, a fired body composed of only a metal material.

### <Connecting terminal>

The connecting terminal 16 includes a metal material. The connecting terminal 16 may be composed of the same material as or different material from that of the first external connecting terminal 15a and the second external connecting terminal 15b, but it is preferably composed of the same material.

### <Current collecting wiring>

The current collecting wiring 17 includes a metal material. The current collecting wiring 17 may be composed of the same material as or different material from that of the first external connecting terminal 15a and the second external connecting terminal 15b, but it is preferably composed of the same material.

### <Dye>

As the dye, for example, a photosensitizing dye such as a ruthenium complex having a ligand including a bipyridine structure, a terpyridine structure, an organic dye such as porphyrin, eosin, rhodamine or merocyanine; and an organic-inorganic composite dye such as a halogenated lead-based perovskite crystal may be exemplified. As the halogenated lead-based perovskite, for example, CH₃NH₃PbX₃ (X = Cl, Br, I) is used. Herein, in a case where a photosensitizing dye is used as the dye, the photoelectric conversion element 100 is a dye-sensitized photoelectric conversion element and the photoelectric conversion cell 20 is a dye-sensitized photoelectric conversion cell.

Among the above-mentioned dyes, the ruthenium complex having a ligand including a bipyridine structure or a terpyridine structure is preferred. In this case, it is possible to more improve the photoelectric conversion characteristic of the photoelectric conversion element 100.

### <Covering part>

The linear expansion coefficient of the covering part 30 is not particularly limited as long as the linear expansion coefficient is smaller than the linear expansion coefficient of the sealing portion 60. That is, it is acceptable that a ratio (A1/A2) of the linear expansion coefficient A1 of the covering part 30 to the linear expansion coefficient A2 of the sealing portion 60 is less than 1. However, A1/A2 is preferably 0.5 or less, and more preferably 0.35 or less. In this case, even if the sealing portion 60 expands and contracts and a repetitive stress is applied to at least the main surface 91a on the side facing away from the transparent substrate 11 of the wiring part 91, the stress is sufficiently relaxed by the covering part 30. Therefore, the occurrence of cracks in at least the main surface 91a on the side facing away from the transparent substrate 11 of the wiring part 91 is sufficiently suppressed. Therefore, the photoelectric conversion element 100 can have more excellent durability even when used under an environment having a large temperature change. However, A1/A2 is preferably 0.15 or more, and is more preferably 0.20 or more. In this case, the occurrence of cracks under an environment having a large temperature change is more sufficiently suppressed.

The linear expansion coefficient of the covering part 30 is not particularly limited, but is typically 150 ppm/°C or less, preferably 100 ppm/°C or less, more preferably 80 ppm or less, and particularly preferably 60 ppm/°C or less. In this case, even if the sealing portion 60 expands and contracts and a repetitive stress is applied to at least the main surface 91a on the side facing away from the transparent substrate 11 of the wiring part 91, the stress is more sufficiently relaxed by the covering part 30. Therefore, the occurrence of cracks in at least the main surface 91a on the side facing away from the transparent substrate 11 of the wiring part 91 is sufficiently suppressed. Therefore, the photoelectric conversion element 100 can have more excellent durability even when used under an environment having a large temperature change. However, the linear expansion coefficient of the covering part 30 is 25 ppm/°C or more and more preferably 30 ppm or more. In this case, the occurrence of cracks in the covering part 30 under an environment having a large temperature change is more sufficiently suppressed.

The covering part 30 is not particularly limited. It is acceptable that the coating layer 30 includes a metal layer composed of a metal material on the side of the transparent substrate 11, or a layer composed of a resin material (insulating material). For example, the covering part 30 includes at least one layer composed of a resin material. Examples of the resin material include, for example, a polyimide resin, an epoxy resin, a polyurethane resin, and polyethylene terephthalate (PET) resin. Among them, the polyimide resin is preferable. In this case, more excellent insulation can be imparted to the covering part 30.

The color of the covering part 30 is not particularly limited but is preferably black. In this case, more excellent concealing properties can be imparted to the covering part 30, or heat generated in the photoelectric conversion cell 20 is easily released due to a large heat radiation.

The thickness of the covering part 30 is not particularly limited but is preferably 30 to 300µm. In this case, heat resistance of the covering part 30 becomes higher.

### <Counter substrate>

The counter substrate 50 includes, as described above, the metal substrate 51 which serves as a substrate and an electrode, and the catalyst layer 52.

### (Metal substrate)

The metal substrate 51 is composed of a metal, but the metal is preferably a metal capable of forming a passivation. In this case, since the metal substrate 51 is less likely to be corroded by the electrolyte 80, the photoelectric conversion element 100 can have more excellent durability. Examples of the metal capable of forming a passivation include, for example, titanium, nickel, molybdenum, tungsten, aluminum, stainless steel, and alloys thereof. The thickness of the metal substrate 51 is appropriately determined depending on the size of the photoelectric conversion element 100 and is not particularly limited, but is set to, for example, 0.005 mm to 0.1 mm.

### (Catalyst layer)

The catalyst layer 52 is composed of platinum, a carbon-based material, a conductive polymer or the like. Herein, as the carbon-based material, carbon black or carbon nanotubes are preferably used.

### <Sealing portion>

Examples of the material constituting the sealing portion 60 include a resin such as a modified polyolefin resin including an ionomer, an ethylene-vinyl acetate anhydride copolymer, an ethylene-methacrylic acid copolymer and an ethylene-vinyl alcohol copolymer; a ultraviolet curable resin; a vinyl alcohol polymer and the like. These can be used singly or in a combination of two or more kinds thereof.

The thickness of the sealing portion 60 is not particularly limited, but is typically 10 to 50 µm, and preferably 20 to 40 µm. In this case, intrusion of moisture into the inside of the sealing portion 60 can be sufficiently suppressed.

### <Insulating layer>

The insulating layer 70 is composed of an insulating material. Examples of such an insulating material include a resin and an inorganic insulating material. Among them, an inorganic insulating material is preferable. In this case, since the insulating layer 70 covers the groove 40 as well as the entire region excluding a region where the oxide semiconductor layer 13 is provided of the electrode 12A inside the outer peripheral edge 70c of the sealing portion 60, and the inorganic material has a sealing ability higher than that of the resin, intrusion of moisture from the groove 40 is sufficiently suppressed. Examples of such an inorganic insulating material include glass

The insulating material constituting the insulating layer 70 is preferably colored. In this case, it is suppressed that the counter substrate 50 can be remarkably seen when the photoelectric conversion element 100 is viewed from the light receiving surface 11a side. Therefore, a good appearance can be realized. Further, since the electrode 12A does not have to be colored, it is possible to sufficiently suppress the lowering of the photoelectric conversion characteristic of the photoelectric conversion element 100. As the colored insulating material, for example, an inorganic insulating material such as colored glass can be used.

When the insulating layer 70 is colored, the color is not particularly limited. Various colors can be used depending on the purpose.

The thickness of the insulating layer 70 is not particularly limited, but is typically from 10 to 30 µm, and preferably from 15 to 25 µm.

### <Electrolyte>

The electrolyte 80 contains a redox pair and an organic solvent. It is possible to use acetonitrile, methoxy acetonitrile, methoxy propionitrile, propionitrile, ethylene carbonate, propylene carbonate, diethyl carbonate, γ-butyrolactone, valeronitrile or pivalonitrile as the organic solvent. Examples of the redox pair include a redox couple such as bromide ion (bromine ion)/polybromide ion, a zinc complex, an iron complex, and a cobalt complex in addition to iodide ion/polyiodide ion (for example, I⁻/I₃⁻). In addition, iodine ion/polyiodide ion can be formed by iodine (I₂) and a salt (an ionic liquid or a solid salt) containing iodide (I⁻) as an anion. In a case of using the ionic liquid having iodide as an anion, only iodide may be added. In a case of using an organic solvent or an ionic liquid other than iodide as an anion, a salt containing iodide (I⁻) as an anion such as LiI, tetrabutylammonium iodide or the like may be added.

In addition, the electrolyte 80 may use an ionic liquid instead of the organic solvent. As the ionic liquid, for example, an ordinary temperature molten salt which is a known iodine salt, such as a pyridinium salt, an imidazolium salt, or a triazolium salt, and which is in a molten state at around room temperature is used. As such an ordinary temperature molten salt, for example, 1-hexyl-3-methylimidazolium iodide, 1-ethyl-3-propylimidazolium iodide, dimethylimidazolium iodide, ethylmethylimidazolium iodide, dimethylpropylimidazolium iodide, butylmethylimidazolium iodide, or methylpropylimidazolium iodide is preferably used.

In addition, the electrolyte 80 may use a mixture of the above ionic liquid and the above organic solvent instead of the above organic solvent.

In addition, it is possible to add an additive to the electrolyte 80. Examples of the additive include LiI, I₂, 4-t-butylpyridine, guanidium thiocyanate, 1-methylbenzimidazole, and 1-butylbenzimidazole.

Moreover, as the electrolyte 80, a nanocomposite gel electrolyte which is a quasi-solid electrolyte obtained by kneading nanoparticles such as SiO₂, TiO₂, and carbon nanotubes with the above electrolyte to form a gel-like form may be used, or an electrolyte gelled using an organic gelling agent such as polyvinylidene fluoride, a polyethylene oxide derivative, or an amino acid derivative may also be used.

In addition, the electrolyte 80 contains a redox couple including iodide ions/polyiodide ions (for example, I⁻/I₃⁻), and a concentration of the polyiodide ions is preferably 0.006 mol/L or less. In this case, since the concentration of polyiodide ions carrying electrons is low, leakage current can be further reduced. For this reason, since an open circuit voltage can be further increased, the photoelectric conversion characteristics can be further improved. Particularly, the concentration of the polyiodide ions is preferably 0.005 mol/liter or less, more preferably in a range of 0 to 6×10⁻⁶ mol/liter, even more preferably in a range of 0 to 6×10⁻⁸ mol/liter. In this case, in a case where the photoelectric conversion element 100 is viewed from the light receiving surface 11a side of the transparent substrate 11, it is possible to make the color of the electrolyte 80 visually less noticeable.

### <Conductive member>

The conductive member 90 has the wiring part 91 and the body part 92, as described above. The conductive member 90 includes a metal material. As the metal material, for example, silver or copper can be used. The conductive member 90 may further include a binder resin in addition to the metal material. Examples of the binder resin include an epoxy resin, a polyester resin, and acrylic resin. Among these, the epoxy resin or the polyester resin is preferable since thermal expansion is less likely to occur even at a high temperature and the temporal change of the resistance can be made smaller.

Part of the wiring part 91 of the conductive member 90 and the body part 92 may be constituted by a laminate including a first layer provided on the metal substrate 51 and a second layer directly connected to the first layer. In this case, it is preferable that the first layer include the metal material, the binder resin and carbon, the second layer include the metal material and the binder resin and the content rate of carbon in the first layer be larger than the content rate of carbon in the second layer. In this case, the conductive member 90 is less likely to be peeled from the metal substrate 51.

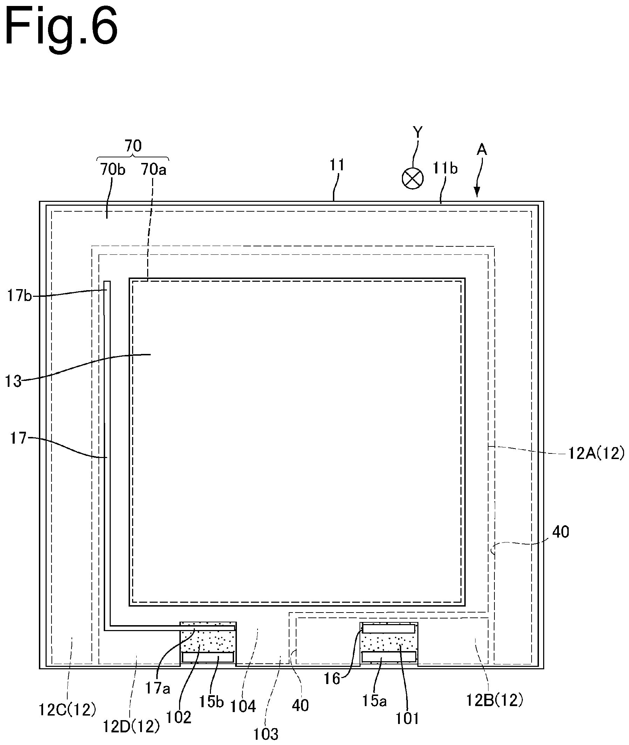

Next, a method of manufacturing the photoelectric conversion element 100 will be described with reference to Figs. 1 and 3 to 6. Fig. 6 is a cross-sectional view showing a structure obtained in the middle of the manufacturing method of the photoelectric conversion element of Fig.1.

First, a laminate obtained by forming a transparent conductive film on the cell installation surface 11b of one transparent substrate 11 is prepared.

As the method of forming the transparent conductive film 12, a sputtering method, a vapor deposition method, a spray pyrolysis deposition method, a CVD method or the like is used.

Next, as shown in Fig. 3, the groove 40 is formed in the transparent conductive film to form the transparent conductive layer 12. At this time, the transparent conductive layer 12 is formed so that the electrode 12A, the first current extracting portion 12B the separating part 12C and the second current extracting portion 12D are formed.

The groove 40 can be formed by a laser scribing method using a YAG laser or a CO₂ laser as a light source, for example.

Next, a precursor of the first external connecting terminal 15a and a precursor of the connecting terminal 16 are formed on the first current extracting portion 12B to be separated from each other. The precursor of the first external connecting terminal 15a and the precursor of the connecting terminal 16 can be formed by applying and drying a silver paste, for example.

A precursor of the second external connecting terminal 15b is formed on the second current extracting portion 12D. The precursor of the second external connecting terminal 15b can be formed by applying and drying a silver paste, for example.

Further, a precursor of the current collecting wiring 17 is formed so as to straddle the electrode 12A and the second current extracting portion 12D. At this time, the precursor of the current collecting wiring 17 is formed so that the one end is disposed at a position separated from the precursor of the second external connecting terminal 15b on the second current extracting portion 12D and the other end is disposed at a position on the electrode 12A. The precursor of the current collecting wiring 17 can be formed by applying and drying a silver paste, for example.

Further, a precursor of the insulating layer 70 is formed to hide and cover a region excluding a region scheduled to form the oxide semiconductor layer 13 (hereinafter referred to as "semiconductor layer formation scheduled region"), the connecting terminal-the external connecting terminal region 101 and the Wiring-External Connecting Terminal region 102 of the transparent conductive layer 12. At this time, the precursor of the insulating layer 70 is formed so that the precursor of the insulating layer 70 enters the groove 40. The precursor of the insulating layer 70 can be formed by applying and drying a paste containing an inorganic insulating material, for example.

Next, the precursor of the first external connecting terminal 15a, the precursor of the second external connecting terminal 15b, the precursor of the connecting terminal 16, the precursor of the current collecting wiring 17 and the precursor of the insulating layer 70 are collectively fired to form the first external connecting terminal 15a, the second external connecting terminal 15b, the connecting terminal 16, the current collecting wiring 17 and the insulating layer 70.

At this time, the firing temperature varies depending on the kind of the insulating material, but is typically 350 to 600°C. The firing time also varies depending on the kind of the insulating material but is typically 1 to 5 hours.

Next, a precursor of the oxide semiconductor layer 13 is formed on the semiconductor layer formation scheduled region of the electrode 12A.

The precursor of the oxide semiconductor layer 13 is obtained by printing a past for oxide semiconductor layer for forming the oxide semiconductor layer 13 and drying the paste. The paste for oxide semiconductor layer includes a resin such as polyethylene glycol or ethyl cellulose, and a solvent such as terpineol in addition to titanium oxide.

It is possible to use, for example, a screen printing method, a doctor blading method, or a bar coating method as the printing method of the paste for oxide semiconductor layer.

Next, the precursor of the oxide semiconductor layer 13 is fired to form the oxide semiconductor layer 13.

At this time, the firing temperature varies depending on the kind of the oxide semiconductor particles, but is typically 350-600°C. The firing time also varies depending on the kind of the oxide semiconductor particles but is typically 1 to 5 hours.

Thus, as shown in Fig. 6, a structure A is obtained.

Next, a sealing portion forming body for forming the sealing portion 60 is prepared. The sealing portion forming body can be obtained by preparing one sheet of a resin film for sealing composed of the material constituting the sealing portion 60 and forming an opening in the resin film for sealing, for example.

Then, as shown in Fig.5, the sealing portion forming body is adhered onto the structure A. At this time, the sealing portion forming body is adhered to the structure A so that it overlaps with the insulating layer 70 and is disposed on the inside of the sealing portion forming body. Adhesion of the sealing portion forming body to the structure A can be conducted by heating and melting the sealing portion forming body, for example.

Next, a dye is supported on the oxide semiconductor layer 13 of the structure A. For this purpose, for example, the structure A is immersed in a dye solution containing a dye to make the dye adsorb on the oxide semiconductor layer 13 and then the excess dye is washed away with the solvent component of the above solution and is dried.

Next, the electrolyte 80 is disposed on the oxide semiconductor layer 13.

On the other hand, the counter substrate 50 is prepared. The counter substrate 50 can be obtained by forming the conductive catalyst layer 52 on the metal substrate 51, for example.

Next, another sealing portion forming body described above is prepared. Then, the counter substrate 50 is stuck so as to close the opening of the sealing portion forming body.

Next, the sealing portion forming body adhered to the counter substrate 50 and the sealing portion forming body adhered to the structure A where the electrolyte 80 is disposed are overlapped, and then heated and melted while the sealing portion forming bodies are pressurized. Thus, the sealing portion 60 is formed between the transparent substrate 11 of the structure A and the counter electrode 50. Formation of the sealing portion 60 may be conducted under atmospheric pressure or under reduced pressure but is preferably conducted under reduced pressure.

Then, as shown in Fig.4, the connecting terminal 16 and the metal substrate 51 of the counter substrate 50 are connected by the conductive member 90. At this time, for the conductive member 90, a paste containing a metal material constituting the conductive member 90 is prepared and the paste is applied and cured to connect the metal substrate 51 of the counter substrate 50 and the connecting terminal 16. As the above paste, a low-temperature curing type paste capable of being cured at a temperature of 90°C or less is preferably used in terms of avoiding adverse effects on the dye supported on the oxide semiconductor layer 13.

Finally, the covering part 30 is formed. The covering part 30 is formed so that the covering part 30 covers the main surface 91a of the wiring part 91 of the conductive member 90 on the side facing away from the transparent substrate 11 and the one end 30c of the covering part 30 extends to the inside of the sealing portion 60 and the other end 30d of the covering part 30 extends to the outside of the sealing portion 60, when the photoelectric conversion element 100 is viewed in the direction Y orthogonal to the cell installation surface 11b of the transparent substrate 11. Further, the covering part 30 is formed so that the one end 30c of the covering part 30 extends to the inside of the sealing portion 60 beyond the one end 91c of the wiring part 91 and is also fixed at the metal substrate 51 of the counter substrate 50, the other end 30d of the covering part 30 extends to the outside of the sealing portion 60 beyond the other end 91d of the wiring part 91 and is also fixed at the connecting terminal 16, and the other end also covers the side surface 91b of the wiring part 91 and is fixed at the metal substrate 51 and the connecting terminal 16.

In the above-mentioned manner, the photoelectric conversion element 100 is obtained.

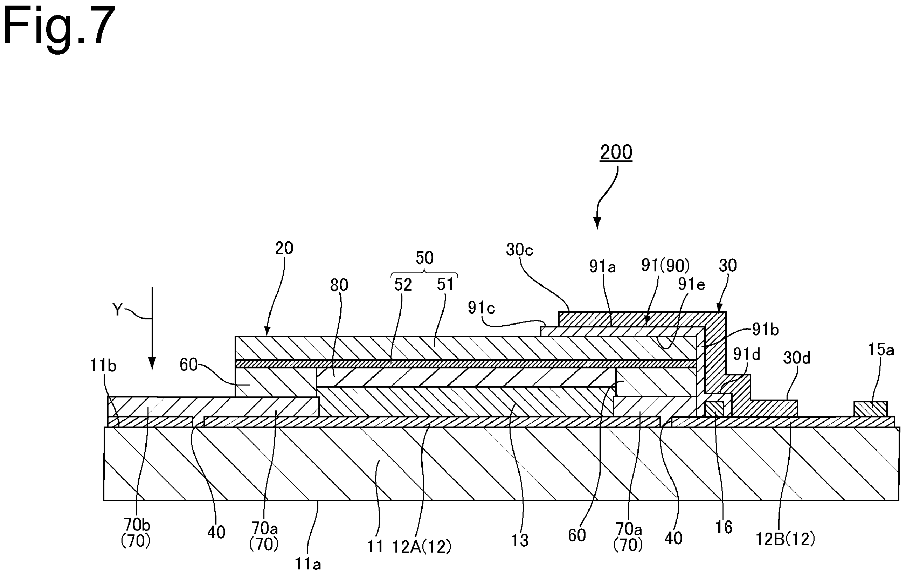

The present invention is not limited to the above embodiment. For example, in the above embodiment, the one end 30c of the covering part 30 extends to the inside of the sealing portion 60 beyond the one end 91c of the wiring part 91 and is also fixed at the metal substrate 51 of the counter substrate 50, but it is not necessary that the one end 30c of the covering part 30 extend to the inside of the sealing portion 60 beyond the one end 91c of the wiring part 91 and be also fixed at the metal substrate 51 of the counter substrate 50. That is, the one end 30c of the covering part 30 may be beyond the one end 91c of the wiring part 91, but it is allowed that the one end 30c is not fixed at the metal substrate 51, or it is allowed that the one end 30c is not beyond the one end 91c of the conductive member 90 and is not fixed at the metal substrate 51 as in the photoelectric conversion element 200 shown in Fig. 7. The length of the covering part 30 inside the sealing portion 60 is not particularly limited when the one end 30c of the covering part 30 is not beyond the one end 91c of the wiring part 91 and the photoelectric conversion element 100 is viewed in the direction Y orthogonal to the cell installation surface 11b of the transparent substrate 11, but is preferably 50% or more and more preferably 80% or more of the length of a part on the inner side from the sealing portion 60 of the wiring part 91.

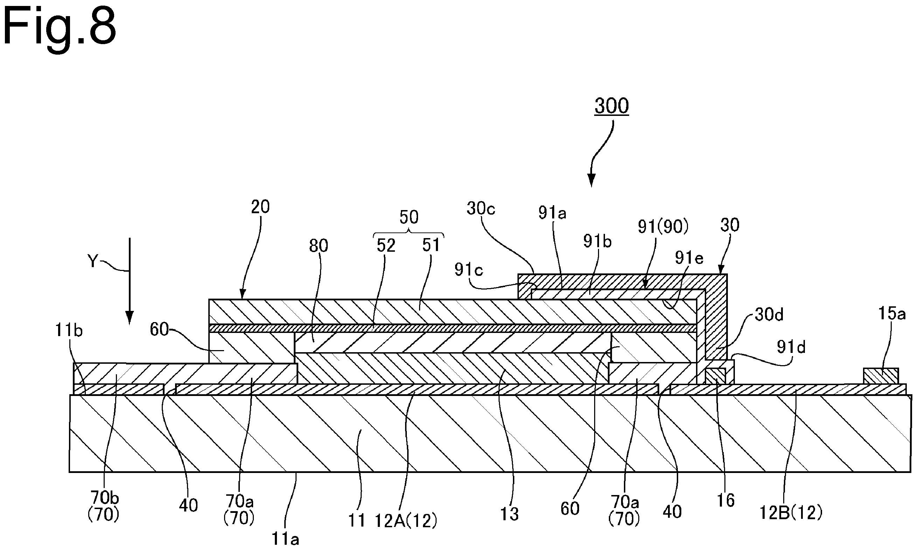

Further, in the above embodiment, the other end of the covering part 30 extends to the outside of the sealing portion 60 beyond the other end 91d of the wiring part 91 and is also fixed at the first current extracting portion 12B, but it is not necessary that the other end 30d of the covering part 30 extends to the outside of the sealing portion 60 beyond the other end 91d of the wiring part 91 and is fixed at the first current extracting portion 12B. That is, it is allowed that the other end 30d of the covering part 30 is beyond the other end 91d of the wiring part 91, but it is allowed that the other end 30d is not fixed at the first current extracting portion 12B, or it is also allowed that the other end 30d is not beyond the other end 91d of the wiring part 91 and is not fixed at the first current extracting portion 12B as in the photoelectric conversion element 300 shown in Fig.8. The length of the covering part 30 outside the sealing portion 60 is not particularly limited when the other end 30d of the covering part 30 is not beyond the other end 91d of the wiring part 91 and the photoelectric conversion element 100 is viewed in the direction Y orthogonal to the cell installation surface 11b of the transparent substrate 11, but is preferably 50% or more and more preferably 80% or more of the length of a part outside the sealing portion 60 of the wiring part 91.

Furthermore, in the above embodiment, the covering part 30 covers the side surface 91b of the wiring part 91 and is fixed at the metal substrate 51 and the connecting terminal 16, but the covering part 30 may not cover the side surface 91b of the conductive member 90.

Moreover, in the above embodiment, the photoelectric conversion cell 20 is not covered with a protective layer covering and protecting the cell on the transparent substrate 11, but the photoelectric conversion cell 20 may be covered with the protective layer. For example, the entire surface of a region excluding the first external connecting terminal 15a, the second external connecting terminal 15b, the Connecting Terminal-External Connecting Terminal region 101 and the Wiring-External Connecting Terminal region 102 of the region on the transparent substrate 11 may be covered with the protective layer in the case of viewing in the direction Y orthogonal to the cell installation surface 11b of the transparent substrate 11. In this case, part of the protective layer can be functioned as the covering part 30.

Furthermore, in the above embodiment, the insulating layer 70 covers the entire region excluding the region where the oxide semiconductor layer 13 is provided of the electrode 12A on the inside of the outer peripheral edge of the sealing portion 60, but the insulating layer 70 may cover only part of the region excluding the region where the oxide semiconductor layer 13 is provided of the electrode 12A on the inside of the outer peripheral edge of the sealing portion 60. Moreover, in the above embodiment, the insulating layer 70 is constituted by the inner insulating layer 70a and the outer insulating layer 70b but the insulating layer 70 may be constituted by only the inner insulating layer 70a.

Furthermore, in the above embodiment, the photoelectric conversion element 100 includes the insulating layer 70 but does not have to include the insulating layer 70.

Furthermore, in the above embodiment, the photoelectric conversion element 100 includes the current collecting wiring 17, but the photoelectric conversion element of the present invention does not necessarily include the current collecting wiring 17.

Furthermore, in the above embodiment, the separating part 12C is provided to surround the electrode 12A and the second current extracting portion 12D on the transparent substrate 11, but the separating part 12C may not be provided on the transparent substrate 11.

Further, in the above embodiment, only one photoelectric conversion cell 20 is provided on the transparent substrate 11, but, in the photoelectric conversion element 100, a plurality of photoelectric conversion cells 20 may be provided on the transparent substrate 11. In this case, the plurality of photoelectric conversion cells 20 may be connected in series or may be connected in parallel. When the plurality of photoelectric conversion cells 20 are connected in series, the first current extracting portion 12B is connected to the counter substrate 50 of the photoelectric conversion cell 20 on the one end side of the plurality of the photoelectric conversion cells 20 and the second current extracting portion 12D is connected to the electrode 12A of the photoelectric conversion cell 20 on the other end side. In addition, when the plurality of the photoelectric conversion cells 20 are connected in parallel, the first current extracting portion 12B is connected to the counter substrates 50 of all of the photoelectric conversion cells 20 of the plurality of the photoelectric conversion cells 20 and the second current extracting portion 12D is connected to the electrodes 12A of all of the photoelectric conversion cells 20 of the plurality of the photoelectric conversion cells 20.

### Examples

Hereinafter, the content of the present invention will be described more specifically with reference to examples, the present invention is not limited to the following examples.

### (Example 1)

First, prepared was a laminate obtained by forming a transparent conductive film composed of FTO having a thickness of 0.7 µm on the cell installation surface 11b of the transparent substrate 11 which was composed of alkali-free glass, had a dimension of 112 mm × 56 mm and had a thickness of 2.2 mm. Next, the groove 40 was formed in the transparent conductive film by a YAG laser to form the transparent conductive layer 12. At this time, the transparent conductive layer 12 was formed so that the electrode 12A, the first current extracting portion 12B, and the second current extracting portion 12D were formed. At this time, the width of the groove 40 was set to 0.1 mm. In addition, the electrode 12A was formed so as to have a quadrangular shape of 54.4 mm × 104.5 mm and the second current extracting portion 12D was formed to extend from one side of the electrode 12A and to have a quadrangular shape. The length in the extending direction of the second current extracting portion 12D was set to 4.3 mm and the width of the second current extracting portion 12D was set to 27.2 mm.

Further, the first current extracting portion 12B was formed to have a dimension of 27.2 mm × 4.3 mm.

Next, a precursor of the first external connecting terminal 15a and a precursor of the connecting terminal 16 were formed on the first current extracting portion 12B to have a rectangular shape and to be separated from each other. At this time, the precursor of the first external connecting terminal 15a was formed to have a dimension of 8 mm × 1.8 mm and the precursor of the connecting terminal 16 was formed to have a dimension of 8 mm × 0.3 mm. Further, a precursor of the second external connecting terminal 15b was formed to have a rectangular shape on the second current extracting portion 12D. At this time, the precursor of the second external connecting terminal 15b was formed to have a dimension of 8 mm × 1.8 mm.

Further, the current collecting wiring 17 was formed so as to straddle the second current extracting portion 12D and the electrode 12A. At this time, the precursor of the current collecting wiring 17 was formed so that one end of the precursor of the current collecting wiring was disposed at a position separated from the precursor of the second external connecting terminal 15b on the second current extracting portion 12D and so that the other end was disposed at a position on the electrode 12A. The precursor of the current collecting wiring 17 was formed to have a L-shape and to have a part with a dimension of 0.3 mm in width × 21.6 in length and a part with a dimension of 0.3 mm in width × 105.1 mm in length.

In addition, the precursor of the connecting terminal 16, the precursor of the first external connecting terminal 15a, the precursor of the second external connecting terminal 15b and the precursor of the current collecting wiring 17 were all formed by applying and drying a silver paste.

Next, a precursor of the insulating layer 70 was formed to cover and hide a region excluding the semiconductor layer formation scheduled region, the Connecting Terminal-External Connecting Terminal region 101 and the Wiring-External Connecting Terminal region 102 of the transparent conductive layer 12. At this time, the precursor of the insulating layer 70 was formed to enter the groove 40. The precursor of the insulating layer 70 was formed by applying a past containing glass frit (Product name "PLFOC-837B", manufactured by Okuno Chemical Industries Co., Ltd.) and drying the paste.

Next, the precursor of the first external connecting terminal 15a, the precursor of the second external connecting terminal 15b, the precursor of the connecting terminal 16, the precursor of the current collecting wiring 17 and the precursor of the insulating layer 70 were collectively fired to form the first external connecting terminal 15a, the second external connecting terminal 15b, the connecting terminal 16, the current collecting wiring 17 and the insulating layer 70. At this time, the firing temperature was set to 500°C and the firing time was set to one hour. Further, at this time, the spacing L between the first external connecting terminal 15a and the connecting terminal 16 was 0.5 mm. The spacing L' between the second external connecting terminal 15b and the first current collecting wiring end 17a was 0.5 mm.

Further, a precursor of the oxide semiconductor layer 13 was formed on the semiconductor layer formation scheduled region of the electrode 12A. At this time, the precursor of the oxide semiconductor layer 13 was obtained by applying a paste containing titanium oxide to be filled inside the insulating layer 70 by screen printing and drying the paste at 150°C for 10 minutes.

Next, the precursor of the oxide semiconductor layer 13 was fired to form the oxide semiconductor layer 13. At this time, the firing temperature was set to 500°C and the firing time was set to one hour. Thus, the structure A was obtained.

Next, a sealing portion forming body for forming a sealing portion was prepared. The sealing portion forming body was obtained by preparing one sheet of resin film for sealing which has a dimension of 51.2 mm × 106.1 mm × 35 µm and is composed of a maleic anhydride modified polyethylene (Product name "Bynel", manufactured by Du pont, linear expansion coefficient: 180 ppm/°C) and forming one rectangular opening of 47.2 mm × 102.1 mm in the resin film for sealing.

After the sealing portion forming body was superimposed on the structure A, the sealing portion forming body was adhered to the insulating layer 70 on the structure A by heating and melting the sealing portion forming body. At this time, the sealing portion forming body was adhered to the structure A so as to overlap with the insulating layer 70 and to be disposed between the oxide semiconductor layer 13 and the connecting terminal 16 and the current collecting wiring 17.

Next, the structure A obtained in the manner as described above was immersed for a whole day and night in a dye solution containing 0.2mM of a photosensitizing dye composed of Z907 and using a mixed solvent obtained by mixing acetonitrile and tert-butanol in a volume ratio of 1 to 1 as a solvent, and was then taken out and dried. Thus, the photosensitizing dye was supported on the oxide semiconductor layer 13.

Next, the electrolyte 80 obtained by adding I₂, methyl benzimidazole, butyl benzimidazole, guanidium thiocyanate and t-butyl pyridine to a mixture of dimethyl propyl imidazolium iodide and 3-methoxypropionitrile. Then, the above electrolyte 80 was dropped and applied, and then disposed on the oxide semiconductor layer 13.

Next, one sheet of counter substrate 50 was prepared. The counter substrate 50 was prepared by forming a catalyst layer which is composed of platinum and has a thickness of 5nm on a titanium foil of 51.2 mm × 106.1 mm × 40 µm by a sputtering method. In addition, another sealing portion forming body described above was prepared. Then, the counter substrate 50 was stuck so as to close the opening of the sealing portion forming body.

Then, the sealing portion forming body adhered to the counter substrate 50 and the sealing portion forming body adhered to the structure where the electrolyte 80 was disposed were superimposed on each other under reduced pressure and were heated and melted while the sealing portion forming bodies were pressurized. Thus, a sealing portion was formed between the structure and the counter substrate 50. At this time, the thickness of the sealing portion 60 was 40 µm, and the width of the sealing portion 60 was 2 mm.

Next, the connecting terminal 16 and the metal substrate 51 of the counter substrate 50 were connected by a conductive member 90 in the following manner.

That is, first, silver particles (average particle diameter:3.5 µm), carbon (average particle diameter:500 nm) and a polyester based resin was dispersed in a solvent composed of diethylene glycol monoethyl ether acetate to prepare a first conductive paste. At this time, the silver particles, the carbon, the polyester based resin and the solvent were mixed in a mass ratio of 70: 1: 10: 19.

On the other hand, silver particles (average particle diameter: 2 µm) and the polyester based resin was dispersed in a solvent composed of ethylene glycol monobutyl ether acetate to prepare a second conductive paste. At this time, the silver particles, the polyester based resin and the solvent were mixed in a mass ratio of 65: 10: 25.

Then, the first conductive paste was applied on the metal substrate 51 to form part of a precursor of the body part 92 and part of a precursor of the wiring part 91. Thereafter, the second conductive paste was applied to part of the precursor of the body part 92 and the precursor of the wiring part 91, and as was applied to connect the connecting terminal 16 on the first current extracting portion 12B and part of the precursor of the wiring part 91. Thus, a precursor of the conductive member was formed. Then, the precursor of the conductive member 90 was heated and cured at 85°C for 12 hours to form the conductive member 90. Thus, the conductive member 90 including the body part 92 and the three wiring parts 91 was formed. At this time, the three wiring parts 91 were all formed to have a thickness of 30 µm and to have a dimension of 2 mm × 6 mm when being viewed in the direction Y orthogonal to the cell installation surface 11b of the transparent substrate 11. That is, the wiring part 91 was formed to have a length of 6 mm when being viewed in the direction Y orthogonal to the cell installation surface 11b of the transparent substrate 11. At this time, the wiring part was formed so that the length of a part of the wiring part 91 on the metal substrate 51 was 5 mm. The body part 92 was formed so that it has a dimension of 41.2 mm × 4.5 mm × 60 µm in thickness in a state integrated with the one end 91c of the wiring part 91.

Next, the covering part 30 was formed by sticking a polyimide tape (Product name "tesa tape 67350", Tesa tape K.K, linear expansion coefficient: 30 ppm/°C). At this time, the covering part 30 was formed so that it covered the main surface 91a on the side facing away from the transparent substrate 11 of the wiring part 91 and the one end 30c of the covering part 30 extended to the inside of the sealing portion 60 and the other end 30d of the covering part 30 extended to the outer side by 1 mm from the sealing portion 60 and covered the side surface 91b of the wiring part 91 and was fixed at the metal substrate 51 and the connecting terminal 16. At this time, the length x of a part on the inner side from the sealing portion 60 of the covering part 30 was set to 1.5 mm using a direction on the inside from the sealing portion 60 as a positive direction. Here, x was a guide for a covering state of the covering part 30 to the wiring part 91. Thus, the covering part 30 was obtained. In the above manner, a photoelectric conversion element was obtained.

### (Example 2 and Comparative Examples 1-2)

The photoelectric conversion elements were manufactured in the same manner as Example 1 except that the length x of a part on the inner side from the sealing portion 60 of the covering part 30 was set as shown in Table 1.

### (Example 3)

The photoelectric conversion elements were manufactured in the same manner as Example 1 except that the protective layer was formed so as to cover the entire surface of the region excluding the first external connecting terminal 15a and the second external connecting terminal 15b of the region on the transparent substrate 11, and part of the protective layer was formed as the covering part when being viewed in the direction Y orthogonal to the cell installation surface 11b of the transparent substrate 11.

### (Examples 4-5 and Comparative Examples 3-4)

The photoelectric conversion elements were manufactured in the same manner as Example 1 except that the length x of a part on the inner side from the sealing portion 60 of the covering part 30 was set as shown in Table 1, and except that the kind of the sealing portion material constituting the sealing portion 60, linear expansion coefficient A2 of the sealing portion material, the kind of the covering part material (protective layer material) of the covering part, linear expansion coefficient A1 of the covering part material (protective layer material) and the ratio (A1/A2) of linear expansion coefficient A1 of the covering part material (protective layer material) to linear expansion coefficient A2 of the sealing portion material were set as shown in Table 1. In addition, a PET tape used as the covering material is a tape composed of polyethylene terephthalate.

### (Example 6)

The photoelectric conversion element was manufactured in the same manner as Example 4 except that the protective layer was formed so as to cover the entire surface of the region excluding the first external connecting terminal 15a and the second external connecting terminal 15b of region on the transparent substrate 11 when being viewed in the direction Y orthogonal to the cell installation surface 11b of the transparent substrate 11, and part of the protective layer was formed as the covering part.

### (Examples 7-8 and Comparative Examples 5-6)

The photoelectric conversion elements were manufactured in the same manner as Example 1 except that the length x of a part on the inner side from the sealing portion 60 of the covering part 30 was set as shown in Table 1, and except that the kind of the sealing portion material constituting the sealing portion 60, linear expansion coefficient A2 of the sealing portion material, the kind of the covering part material (protective layer material) of the covering part, linear expansion coefficient A1 of the covering part material (protective layer material) and the ratio (A1/A2) of linear expansion coefficient A1 of the covering part material (protective layer material) to linear expansion coefficient A2 of the sealing portion material were set as shown in Table 1.

### (Example 9)

The photoelectric conversion element was manufactured in the same manner as Example 7 except that the protective layer was formed so as to cover the entire surface of the region excluding the first external connecting terminal 15a and the second external connecting terminal 15b of the region on the transparent substrate 11 when being viewed in the direction Y orthogonal to the cell installation surface 11b of the transparent substrate 11, and part of the protective layer was formed as the covering part.

### (Examples 10-11 and Comparative Examples 7-8)

The photoelectric conversion elements were manufactured in the same manner as Example 1 except that the length x of a part on the inner side from the sealing portion 60 of the covering part 30 was set as shown in Table 1, and except that the kind of the sealing portion material constituting the sealing portion 60, linear expansion coefficient A2 of the sealing portion material, the kind of the covering part material (protective layer material) of the covering part 30, linear expansion coefficient A1 of the covering part material (protective layer material) and the ratio (A1/A2) of linear expansion coefficient A1 of the covering part material (protective layer material) to linear expansion coefficient A2 of the sealing portion material were set as shown in Table 1.

### (Example 12)

The photoelectric conversion element was manufactured in the same manner as Example 10 except that the protective layer was formed so as to cover the entire surface of the region excluding the first external connecting terminal 15a and the second external connecting terminal 15b of the region on the transparent substrate 11 when being viewed in the direction Y orthogonal to the cell installation surface 11b of the transparent substrate 11, and part of the protective layer was formed as the covering part.

### (Comparative Examples 9 to 13)

The photoelectric conversion elements were manufactured in the same manner as Example 1 except that the length x of a part on the inner side from the sealing portion 60 of the covering part 30 was set as shown in Table 1, and except that the kind of the sealing portion material of the sealing portion 60, linear expansion coefficient A2 of the sealing portion material, the kind of the covering part material (protective layer material) constituting the covering part 30, linear expansion coefficient A1 of the covering part material (protective layer material) and the ratio (A1/A2) of linear expansion coefficient A1 of the covering part material (protective layer material) to linear expansion coefficient A2 were set as shown in Table 1In the meantime, a PET tape used as the covering material was a tape composed of polyethylene terephthalate.

### (Comparative Example 14)

The photoelectric conversion element was manufactured in the same manner as Comparative Example 9 except that the protective layer was formed so as to cover the entire surface of the region excluding the first external connecting terminal 15a and the second external connecting terminal 15b of the region on the transparent substrate 11 when being viewed in the direction Y orthogonal to the cell installation surface 11b of the transparent substrate 11, and part of the protective layer was formed as the covering part.

### [Durability evaluation]

120 pieces of photoelectric conversion elements obtained as described above were prepared for each of Examples 1-12 and Comparative Examples 1-14. For these photoelectric conversion elements, heat cycle tests in accordance with JIS C 8938 were conducted and conversion efficiencies (%) after the tests were measured with light of 200 lux irradiated from a white LED. The measurements were conducted with two terminals of a measuring device connected to the first external connecting terminal 15a and the second external connecting terminal 15b of the photoelectric conversion element. Then, for photoelectric conversion elements where the conversion efficiency is 0% and the power generation is not performed, it was determined that there is a failure, and the number of failure (piece(s)) was measured. The results are shown in Table 1.

**[Table 1]**

| | Seaing Portion Material | Liner Expansion Coefficient A2 of Sealing Portion Material (ppm/°C) | Covering Part Material (Protective Layer Material) | Liner Expansion Coefficient A1 of Covering Part Material (Protective Layer Material) (ppm/°C) | A1/A2 | Covering State of Covering Part to Wiring Part | Durability |
|---|---|---|---|---|---|---|---|
| | | | | | | X (mm) | Number of Failure (piece(s)) |
| Comparative Example 1 | Bynel | 180 | Polyimide tape | 30 | 0.2 | -1 | 5 |
| Comparative Example 2 | Bynel | 180 | | | 0.2 | 0 | 1 |
| Example 1 | Bynel | 180 | | | 0.2 | 1.5 | 0 |
| Example 2 | Bynel | 180 | | | 0.2 | 3 | 0 |
| Example 3 | Bynel | 180 | | | 0.2 | more than 3 | 0 |
| Comparative Example 3 | Bynel | 180 | PET tape | 65 | 0.4 | -1 | 6 |
| Comparative Example 4 | Bynel | 180 | | | 0.4 | 0 | 3 |
| Example 4 | Bynel | 180 | | | 0.4 | 1.5 | 0 |
| Example 5 | Bynel | 180 | | | 0.4 | 3 | I 0 |
| Example 6 | Bynel | 180 | | | 0.4 | more than 3 | 0 |
| Comparative Example 5 | Bynel | 180 | Epoxy resin | 60 | 0.3 | -1 | 6 |
| Comparative Example 6 | Bynel | 180 | | | 0.3 | 0 | 2 |
| Example 7 | Bynel | 180 | | | 0.3 | 1.5 | 0 |
| Example 8 | Bynel | 180 | | | 0.3 | 3 | 0 |
| Example 9 | Bynel | 180 | | | 0.3 | more than 3 | 0 |
| Comparative Example 7 | Bynel | 180 | Polyurethane resin | 70 | 0.4 | -1 | 8 |
| Comparative Example 8 | Bynel | 180 | | | 0.4 | 0 | 3 |
| Example 10 | Bynel | 180 | | | 0.4 | 1.5 | 0 |
| Example 11 | Bynel | 180 | | | 0.4 | 3 | 0 |
| Example 12 | Bynel | 180 | | | 0.4 | more than 3 | 0 |
| Comparative Example 9 | Bynel | 180 | Absence | - | - | - | 16 |
| Comparative Example 10 | Bynel | 180 | Silicone Resin | 310 | 1.7 | -1 | 14 |
| Comparative Example 11 | Bynel | 180 | | | 1.7 | 0 | 16 |
| Comparative Example 12 | Bynel | 180 | | | 1.7 | 1.5 | 13 |
| Comparative Example 13 | Bynel | 180 | | | 1.7 | 3 | 15 |
| Comparative Example 14 | Bynel | 180 | | | 1.7 | more than 3 | 15 |

From the results shown in Table 1, in the photoelectric conversion elements of Examples 1 to 12, there are few pieces in failure compared to the photoelectric conversion elements of Comparative Examples 1 to 14.

From the above results, according to the photoelectric conversion element of the present invention, it was confirmed that the photoelectric conversion element has excellent durability even when used under an environment having a large temperature change.

### EXPLANATIONS OF REFERRENCE NUMERALS

11 ... Transparent substrate
11b ... Cell installation surface (one surface)
12 ... Transparent conductive layer (conductive layer)
12A ... electrode
16 ... Connecting terminal
20 ... Photoelectric conversion cell
30 ... Covering part
30c ... One end of covering part
30d ... Other End of covering part
50 ... Counter substrate
51 ... Metal substrate
60 ... Sealing portion
90 ... Conductive member
91 ... Wiring part
91a ... Main surface of the wiring part on side facing away from transparent substrate
91b ... Side surface connecting main surface and surface on opposite side to main surface
91c ... One end of wiring part
91d ... Other end of wiring part
91e ... Surface on opposite side to main surface
100, 200, 300 ... Photoelectric conversion element
X ... Extending direction of wiring part
Y ... Direction orthogonal to one surface of transparent substrate

## Claims

1. A photoelectric conversion element, comprising:
a transparent substrate; and
at least one photoelectric conversion cell provided on one surface of the transparent substrate,
wherein the photoelectric conversion cell includes:
an electrode provided on the one surface of the transparent substrate;
a counter substrate facing the electrode and including a metal substrate; and
a ring-shaped sealing portion provided between the transparent substrate and the counter substrate,
wherein the photoelectric conversion element comprises:
a connecting terminal provided on the side facing the one surface of the transparent substrate and on the outside of the sealing portion,
a conductive member including a wiring part connecting the metal substrate of the photoelectric conversion cell and the connecting terminal; and
a covering part covering at least a main surface on the side facing away from the transparent substrate of the wiring part and extending along an extending direction of the wiring part,
wherein one end of the covering part extends to the inside of the sealing portion and the other end of the covering part extends to the outside of the sealing portion when the photoelectric conversion element is viewed in a direction orthogonal to the one surface of the transparent substrate, and
wherein a linear expansion coefficient of the covering part is smaller than a linear expansion coefficient of the sealing portion.

2. The photoelectric conversion element according to claim 1, wherein the one end of the covering part extends beyond one end of the wiring part on the side of the metal substrate and is also fixed at the metal substrate of the counter substrate.

3. The photoelectric conversion element according to claim 1 or 2, wherein the other end of the covering part extends beyond the other end of the wiring part on the side of the connecting terminal and is also fixed at a conductive layer provided between the connecting terminal and the transparent substrate.

4. The photoelectric conversion element according to any one of claims 1 to 3, wherein the covering part covers a side surface connecting the main surface and a surface on the opposite side to the main surface of the wiring part and is also fixed at the metal substrate and the connecting terminal.

5. The photoelectric conversion element according to any one of claims 1 to 4, wherein the linear expansion coefficient of the covering part to the linear expansion coefficient of the sealing portion is 0.5 or less.

6. The photoelectric conversion element according to any one of claims 1 to 5, wherein the linear expansion coefficient of the covering part to the linear expansion coefficient of the sealing portion is 0.15 or more.

7. The photoelectric conversion element according to any one of claims 1 to 6, wherein the linear expansion coefficient of the covering part is 150 ppm/°C or less.

8. The photoelectric conversion element according to any one of claims 1 to 7, wherein the linear expansion coefficient of the covering part is 25 ppm/°C or more.

9. The photoelectric conversion element according to any one of claims 1 to 8, wherein the covering part contains a polyimide resin.

10. The photoelectric conversion element according to any one of claims 1 to 9, wherein the covering part is black.
